# FASCICULE DE BREVET EUROPEEN

(11) **EP 4 034 929 B1**
(45) Date de publication et mention de la délivrance du brevet: **18.12.2024**
(21) Numéro de dépôt: 20788722.5
(22) Date de dépôt: 25.09.2020
(51) Int. Cl.: G02B 7/182, F21S 10/06

(54) **DISPOSITIF OPTIQUE ET MODULE COMPORTANT UN TEL DISPOSITIF OPTIQUE, DESTINES A UN DISPOSITIF D'ECLAIRAGE, PERMETTANT DE CREER DES EFFETS DE LUMIERE**
OPTISCHE VORRICHTUNG SOWIE MODUL MIT EINER SOLCHEN OPTISCHEN VORRICHTUNG FÜR EINE BELEUCHTUNGSVORRICHTUNG ZUR ERZEUGUNG VON LICHTEFFEKTEN
OPTICAL DEVICE AND MODULE COMPRISING SUCH AN OPTICAL DEVICE, BOTH INTENDED FOR A LIGHTING DEVICE, ENABLING THE CREATION OF LIGHTING EFFECTS

(30) Priorité: 26.09.2019 FR 1910667
(43) Date de publication de la demande: 03.08.2022
(73) Titulaire: Arteffect, 93230 Romainville (FR)
(72) Inventeur: NATCHOO, Philippe, 77680 ROISSY EN BRIE (FR); STRAZIELLE, Sylvain, 93100 MONTREUIL (FR); COMPERAT, Charles, 75019 PARIS (FR); BLATRIX, Simon, 75011 PARIS (FR)
(74) Mandataire: IPAZ
(86) Numéro de dépôt international: PCT/EP2020/076998
(87) Numéro de publication internationale: WO 2021/058797

(56) Documents cités:
- US-A1- 2006 268 549

## Description

La présente invention concerne un dispositif optique destiné à un dispositif d'éclairage, permettant de créer des effets de lumière. Le domaine de l'invention est plus particulièrement celui de l'éclairage scénique, en particulier dans le domaine architectural et celui du divertissement, par exemple dans des discothèques, des salles de spectacle pour des concerts, des défilés, des représentations théâtrales, du spectacle vivant, de la danse, pour des événements publics, privés, des émissions de télévision, etc.

Un dispositif d'éclairage de ce type a été décrit dans le document FR-A-3 006 454 et comprend : au moins une source agencée pour émettre un faisceau lumineux, un dispositif optique agencé pour envoyer chaque faisceau lumineux à partir d'une zone centrale dans plusieurs directions possibles contenues dans un cône de lumière dont le sommet est situé dans la zone centrale, de sorte que chaque faisceau lumineux se propage dans son cône de lumière, de préférence un espace clos (contenant des éléments en suspension agencés pour diffuser la lumière de chaque faisceau lumineux, et un système réflecteur agencé pour recevoir chaque faisceau lumineux se propageant dans son cône ou plan de lumière et pour réfléchir dans un espace (de préférence dans l'espace clos optionnel ci-dessus) chaque faisceau lumineux reçu, ledit système réflecteur étant de préférence agencé pour se déplacer entre plusieurs positions de sorte qu'un changement de position modifie la trajectoire d'un faisceau lumineux réfléchi par le système réflecteur. Un tel dispositif d'éclairage permet la conversion d'un faisceau lumineux en une surface de lumière.

Chaque source comprend de préférence un laser ou une diode électroluminescente ou toute autre source lumineuse adaptée. Le dispositif optique comprend quant à lui une surface réfléchissante montée en rotation dans la zone centrale du dispositif d'éclairage autour d'un axe.

Cette surface réfléchissante est de préférence agencée pour réfléchir chaque faisceau lumineux de sorte qu'après réflexion par la surface réfléchissante, chaque faisceau lumineux se propage dans son cône de lumière ou dans un plan selon une direction qui dépend, de préférence, d'une position angulaire de la surface réfléchissante autour de son axe.

Le dispositif optique comporte donc une surface réfléchissante ainsi qu'un support pour cette surface réfléchissante et des moyens de commande agencés pour commander une rotation de la surface réfléchissante autour de son axe.

Au-delà de d'une vitesse de rotation ω du dispositif optique autour de son axe, la persistance rétinienne donnera au spectateur l'impression de voir une surface lumineuse dont la forme variera en fonction des instants auxquels chacune des sources émet son faisceau ; la forme de la surface lumineuse, initialement contenue dans le cône de lumière de ce faisceau, est modifiée par réflexion sur le système réflecteur qui sort ce faisceau et donc cette « surface lumineuse » en dehors du cône de lumière de ce faisceau. Dans ce cas le système optique convertit chaque faisceau lumineux en une première partie de « surface lumineuse » le long de son cône de lumière à l'intérieur de l'espace clos, puis cette surface lumineuse est déployée à l'intérieur de l'espace clos dans une deuxième partie en dehors du cône de lumière de ce faisceau après avoir été réfléchi par le système réflecteur.

Un dispositif optique utilisé dans un dispositif lumineux selon cet état de la technique comporte une surface réfléchissante montée sur un support qui est monté entraînable en rotation sur un moteur. Un tel support comprend notamment un disque présentant sur l'une de ses faces une paroi circulaire ménagée en saillie et définissant un manchon dont l'axe central longitudinal est confondu avec l'axe central du disque, coaxial avec l'axe d'entraînement en rotation du support par le moteur.

Dans le manchon est montée collée la surface réfléchissante qui est constituée d'un miroir, et qui présente une inclinaison d'environ 45°, par exemple, par rapport au disque, le faisceau lumineux réfléchi par la surface passant par une ouverture ou lumière ménagée dans la paroi circulaire du manchon.

La fabrication d'un tel dispositif comporte des étapes de collage, et de réglage (en particulier de l'angle du miroir) qui sont nécessaires mais entraînent des coûts élevés. De plus, la tenue des tolérances dans la répétabilité est un facteur clé pour pouvoir fabriquer de telles pièces complexe afin de garantir la réussite de la fabrication. Le document US2006/0268549 A1 décrit aussi un tel dispositif.

On a cependant pu remarquer que, lors de la mise en oeuvre d'un tel dispositif optique, on se trouve confronté à des problématiques liées à l'entraînement en rotation du support de la surface réfléchissante. En effet, lors de l'assemblage de ce dispositif optique, du fait des tolérances et imprécisions de fabrication et malgré également un dosage calibré de la colle, des perturbations sont générées, provoquant notamment un balourd de la pièce ainsi formée générant un déséquilibre lors de l'entraînement en rotation du dispositif.

De manière à permettre une répartition de la masse correcte autour de l'axe de rotation et éviter ainsi un déséquilibre lors de l'entraînement en rotation du dispositif optique, on peut rectifier le dispositif optique en ménageant des orifices complémentaires dans le manchon. Cependant, il reste nécessaire de reprendre chaque support pour pouvoir le rééquilibrer ce qui nécessite du temps et allonge les temps de fabrication d'un dispositif lumineux comportant un tel dispositif optique. La reprise de la pièce ne présente pas de caractère de répétabilité ce qui rend complexe la fabrication. De plus, certains supports peuvent ne pas être rééquilibrés même en effectuant une reprise de pièce ce qui génère des pertes de pièces et donc de ce fait une perte de temps et des coûts augmentés.

Afin de pallier ces inconvénients, selon un premier aspect de l'invention; l'invention a pour but de proposer un dispositif optique comprenant un composant optique réfléchissant dont le montage ne nécessite plus de colle et permet, une fois assemblé, qu'il soit équilibré et ne nécessite plus aucune opération de reprise en vue de son rééquilibrage.

Selon un deuxième aspect de l'invention, l'invention concerne un module comprenant un dispositif optique, et notamment le dispositif optique selon l'invention, et destiné à être installé facilement dans un dispositif d'éclairage pour générer des effets de lumière.

Selon un troisième aspect, l'invention concerne un dispositif d'éclairage pour générer des effets d'éclairage scéniques et qui comprend un dispositif optique ou un module optique selon l'invention.

A cet effet, l'invention concerne un dispositif optique comprenant un support monté sur un moteur d'entraînement en rotation et un composant optique réfléchissant, le support comprenant au moins un manchon coaxial avec l'axe d'entraînement en rotation, manchon dont une extrémité définit un orifice d'entrée et qui comporte dans sa paroi une ouverture définissant un orifice de sortie et dans lequel est logé le composant optique réfléchissant de sorte qu'un faisceau lumineux entrant par l'orifice d'entrée est réfléchi par le composant optique réfléchissant pour sortir par l'orifice de sortie, caractérisé en ce que le composant optique réfléchissant est monté et maintenu dans le manchon par coopération de forme avec la paroi dudit manchon.

Ainsi de manière avantageuse, la fixation du composant optique réfléchissant s'effectue de manière purement mécanique sans avoir besoin de colle, cette coopération de forme ou engagement positif entre le composant optique et le manchon du support garantissant une mise en place précise et fiable dans le temps.

Selon une forme de réalisation, le support comporte un disque depuis une face duquel le manchon se dresse en saillie, d'une seule pièce avec le disque, le manchon étant constitué d'une paroi circulaire en saillie sur la face du disque, définissant le manchon de section circulaire.

Selon une variante de réalisation, le support comporte un disque depuis une face duquel le manchon se dresse en saillie, le manchon étant fixé sur le disque par des moyens de fixation complémentaires de moyens de fixation prévus sur le disque.

Ainsi, de manière préférée, le disque du support peut présenter un diamètre supérieur au diamètre extérieur du manchon.

Il est également envisageable dans un autre mode de réalisation, que le disque du support présente un diamètre égal au diamètre extérieur du manchon, le support étant donc constitué du manchon fermé à une extrémité par le disque.

Le disque permet notamment la fixation du support sur le moteur d'entraînement en rotation. Le moteur est ainsi fixé sur une face du disque et le manchon est ménagé en saillie sur l'autre face. L'orifice d'entrée est l'extrémité en saillie du manchon. En variante, on peut prévoir que le disque présente un orifice en regard du manchon formant l'orifice d'entrée et dans ce cas, le moteur présente un passage pour le faisceau lumineux.

Selon une premier mode de réalisation d'un dispositif optique selon l'invention, le manchon comporte au moins une ouverture, ménagée dans sa paroi, dans laquelle le composant optique réfléchissant est logé et maintenu engagé dans le manchon, le dispositif comportant en outre un organe de maintien du composant optique réfléchissant dans le support, s'étendant le long du manchon pour recouvrir au moins l'ouverture dans laquelle le composant optique réfléchissant est logé, l'organe de maintien et le support comportant respectivement des moyens de fixation complémentaires.

Ainsi de manière très avantageuse, le montage du composant optique réfléchissant se fait uniquement par la mise en place par engagement positif dudit composant dans l'ouverture ménagée du manchon où il est retenu par la simple mise en place de l'organe de maintien, qui lui est fixé sur le support, conférant un verrouillage de la mise en place du composant optique réfléchissant purement mécanique.

De manière avantageuse, la ou les ouvertures sont de forme et dimensions complémentaires à celles du composant optique réfléchissant de manière à permettre, à la fois son insertion dans le manchon au travers d'une ouverture et son maintien en position précise dans le manchon du fait des dimensions complémentaires ouverture/composant optique réfléchissant, bloquant tout déplacement du composant dans une direction autre que la direction d'insertion. On obtient ainsi avantageusement un positionnement précis du composant optique réfléchissant dans le manchon de manière mécanique. Le composant optique réfléchissant est avantageusement logé et maintenu dans le manchon du dispositif optique de manière précise et fiable pour réfléchir le faisceau lumineux entrant par l'orifice d'entrée du dispositif et pour renvoyer ce faisceau lumineux par l'orifice de sortie du dispositif optique, l'organe de maintien verrouillant cette mise en place.

Le dispositif optique selon l'invention, propose donc des moyens de mise en place simplifiés d'un composant optique réfléchissant ne nécessitant plus le collage dudit composant tel qu'une surface réfléchissante comme un miroir dans le manchon, par exemple sur un support spécifique rapporté dans le manchon pour accueillir cette surface réfléchissante, ce qui entraînait des perturbations dans l'équilibrage du dispositif et une nécessité de reprise du support, par exemple par retrait de matière.

De manière avantageuse, le montage du composant optique réfléchissant par insertion et retenue de celui-ci dans la ou les ouvertures du support par coopération de forme permet un assemblage et un positionnement précis de ce composant optique réfléchissant, l'organe de maintien verrouillant ce montage. Le composant optique réfléchissant est choisi parmi les composants optiques réfléchissants tel qu'une surface réfléchissante comme un miroir qui peut être plan, concave ou convexe. Ce composant optique réfléchissant peut également être constitué de « gratings » (réseaux) en réflexion qui sont des réseaux d'éléments tels que des rayures, des lignes réfléchissantes, permettant de séparer un faisceau en de multiples faisceaux, ou encore d'un diffuseur en réflexion. Par composant optique réfléchissant, on comprend également des composants optiques partiellement réfléchissants du type lame polarisante.

De préférence, le manchon comprend dans sa paroi, deux ouvertures diamétralement opposées et identiques dans lesquelles est logé le composant optique réfléchissant de manière à s'étendre dans le manchon entre ces deux ouvertures, l'organe de maintien étant alors agencé pour recouvrir les deux ouvertures et prévenir le retrait du composant optique réfléchissant maintenu dans les ouvertures.

De manière avantageuse, lorsque le composant optique réfléchissant est une surface réfléchissante tel qu'un miroir plan, les ouvertures sont deux fentes ménagées identiques et diamétralement opposées l'une à l'autre dans le manchon, l'ouverture de sortie du faisceau lumineux réfléchi par ledit miroir étant ménagé en correspondance entre les fentes. Les fentes sont de forme propre à permettre l'insertion du miroir plan dans le manchon, ce composant optique réfléchissant s'étendant dans le manchon entre les deux fentes où il est maintenu par la coopération de forme et de dimensions, l'épaisseur du composant étant complémentaire de la largeur des fentes.

De manière préférée, l'organe de maintien est constitué d'un manchon de maintien insérable sur le manchon du support pour s'étendre contre ledit manchon et recouvrir les deux ouvertures du manchon du support accueillant le composant optique réfléchissant. Le manchon de maintien comprend en outre un orifice ménagé dans sa paroi circulaire pour être mis en correspondance avec l'ouverture de sortie du manchon du support, permettant ainsi la retenue du composant optique réfléchissant dans le support, tout en laissant un faisceau lumineux entrer dans le dispositif optique et en ressortir réfléchi par le composant optique réfléchissant.

De préférence, les moyens de fixation de l'organe de maintien et du support sont constitués de moyens de vissage, permettant une mise en place sécurisée tant du point de vue du positionnement de l'organe de maintien par rapport au manchon du support que du verrouillage lui-même.

En variante, on peut prévoir que les moyens de fixation complémentaires sont constitués de moyens d'encliquetage tels que des clips, ou encore un système de fixation type baïonnette.

Le dispositif optique comprend en outre, un moteur sur lequel le support est monté à l'aide de moyens de fixation tels que des vis engagées dans des orifices de fixation ménagés dans le disque du support, de manière à être entraînable en rotation. Ce moteur est ménagé sur la face du disque, opposée à celle sur laquelle est présent le manchon et donc à l'opposé de l'extrémité ouverte du manchon formant l'entrée du dispositif optique. Avantageusement, le moteur peut ainsi être de structure simple ne nécessitant pas un passage pour le faisceau lumineux.

Toutefois en variante, on peut prévoir que le moteur présente un passage pour le faisceau lumineux tandis que le disque présente un orifice formant l'orifice d'entrée dans le manchon vers le composant optique réfléchissant.

Selon une forme de réalisation préférée de l'invention, l'organe de maintien présente à une extrémité de son manchon une collerette destinée à reposer contre le disque s'étendant autour du manchon du support, une fois l'organe de maintien mis en place. A cet effet, le disque présente de préférence une rainure dans laquelle la collerette dudit organe de maintien se loge. On obtient ainsi un dispositif optique qui, monté sur un moteur, peut être entraîné en rotation à grande vitesse sans générer de bruits trop importants et donc de présenter peu de perturbations acoustiques. En effet, on permet ainsi que le dispositif optique présente une surface continue sans arête vive, ce qui permet d'éviter des perturbations aérodynamiques lors de la rotation du dispositif qui pourraient engendrer des bruits trop importants et gênants.

Le dispositif optique selon l'invention comprend donc un support qui permet d'accueillir le composant optique réfléchissant tel qu'une surface réfléchissante comme un miroir plan, au travers d'ouvertures telles que des fentes ménagées dans le manchon avec une orientation selon un angle choisi, suffisamment précis pour ne pas nécessiter de réglage ultérieur, un organe de maintien qui permet « d'enfermer » et de retenir le composant optique réfléchissant dans le manchon du support sans qu'il soit nécessaire de recourir à de la colle et le moteur permettant l'entraînement en rotation du support.

De préférence, l'inclinaison des fentes permet de définir avec précision l'inclinaison de la surface réfléchissante. Ainsi, si la surface réfléchissante présente une inclinaison de 45°, le faisceau lumineux en sortie, lors de la rotation du dispositif, crée une surface lumineuse plane et si l'angle d'inclinaison de la surface réfléchissante est différent de 45°, le faisceau lumineux en sortie crée une surface lumineuse en forme de cône.

Selon une forme de réalisation avantageuse, le dispositif optique est en outre réalisé pour être équilibré lorsqu'il est entrainé en rotation, les parties constituant ce dispositif présentant des retraits de matière permettant cet équilibrage.

De préférence, le manchon du support présente ainsi un orifice en regard de l'orifice de sortie de sortie du faisceau lumineux.

En fonction du matériau constituant le dispositif, les différents orifices ou retraits de matière à prévoir sont déterminés pour équilibrer le dispositif.

Les dimensions des orifices d'entrée et de sortie du faisceau lumineux sont dimensionnées en fonction de la taille du faisceau de source produit.

De manière avantageuse, l'organe de maintien présente également des retraits de matière si nécessaire, en vue d'équilibrer le dispositif optique ainsi constitué. Ces retraits de matière peuvent être réalisés par des évidements ménagés dans la paroi du manchon constituant ledit organe de maintien.

En variante de ce mode de réalisation, le manchon comporte ménagée dans sa paroi au moins une ouverture dans laquelle le composant optique réfléchissant est logé et maintenu engagé dans le manchon, par engagement à force, sans mise en place d'organe de maintien. De préférence, le manchon comprend deux ouvertures diamétralement opposées et identiques dans lesquelles est logé par engagement à force le composant optique réfléchissant de manière à s'étendre dans le manchon entre ces deux ouvertures. De manière avantageuse, lorsque le composant optique réfléchissant est une surface réfléchissante tel qu'un miroir plan, les ouvertures sont deux fentes ménagées identiques et diamétralement opposées l'une à l'autre dans le manchon, l'ouverture de sortie du faisceau lumineux réfléchi par ledit miroir étant ménagé en correspondance entre les fentes, dans lesquelles le composant optique est engagé à force.

Selon un deuxième mode de réalisation d'un dispositif optique selon l'invention, le composant optique réfléchissant est monté et maintenu dans le manchon, surmoulé dans la paroi du manchon.

Ainsi on obtient avantageusement une coopération de forme par le surmoulage du composant optique réfléchissant qui s'étend dans le manchon. Le composant optique réfléchissant qui est tel que mentionné précédemment, est ainsi maintenu et donc fixé de manière encore plus précise et fiable.

Du fait de l'absence de colle pour réaliser l'assemblage, l'ensemble des pièces constituant le support optique peut être facilement dimensionné pour que le dispositif optique soit équilibré sans nécessiter de reprise de la pièce et ce de manière répétable. Ces pièces peuvent avantageusement être réalisés par moulage de matière plastique tel que du poly(téréphtalate de butylène) ou PBT, et en particulier celui connu sous la référence PBT GF 30, correspondant à du poly(téréphtalate de butylène) renforcé de 30 % de fibres de verre. Leur fabrication est ainsi simplifiée et répétable, permettant d'obtenir un dispositif optique auto-équilibré, ne nécessitant plus de réglages ultérieurs.

Le dispositif selon l'invention permet donc un cycle de fabrication plus court ne nécessitant pas d'étape de reprise, ce qui permet avantageusement de réduire également les coûts.

De préférence, le dispositif optique selon l'invention comporte à son orifice d'entrée du faisceau lumineux, un élément de fermeture laissant passer au moins en partie le faisceau lumineux vers le composant optique réfléchissant.

De manière avantageuse, on évite ainsi toute circulation d'air entrant par cette extrémité ouverte du dispositif optique et qui, ressortant par l'orifice de sortie ménagé pour le faisceau lumineux réfléchi, pourrait engendrer un soufflement et un bruit trop importants, lors de l'entraînement en rotation.

Cet élément de fermeture qui laisse passer au moins une partie d'un faisceau lumineux , de préférence tout le faisceau lumineux, se présente, de préférence, sous forme d'un disque, par exemple en un matériau transparent ou translucide, maintenu en place lors de la mise en place de l'organe de maintien sur le manchon du support, l'extrémité du manchon de maintien de l'organe de maintien présentant un rebord en saillie radiale formant un moyen de retenue du disque contre l'extrémité du manchon du support, ou bien cet élément de fermeture peut également être surmoulé dans le manchon de maintien ou même encore surmoulé dans le manchon du support du dispositif optique.

En variante, on peut envisager qu'un tel élément de fermeture est un composant optique en transmission, laissant passer le faisceau lumineux émis par une source mais pouvant créer des effets optiques, tel que des lentilles permettant de faire diverger ou converger le faisceau et, par conséquent, l'épaisseur du plan de lumière en sortie. Un tel composant optique peut être également un diffuseur pour casser la cohérence du faisceau laser et obtenir ainsi un faisceau beaucoup plus diffus, ou encore des « gratings » (réseaux) qui sont des réseaux d'éléments tels que des rayures, des lignes réfléchissantes, permettant de séparer un faisceau en de multiples faisceaux.

Le dispositif optique peut comporter à son orifice pour la sortie du faisceau lumineux après réflexion sur le composant optique réfléchissant également un élément de fermeture de cet orifice de sortie, laissant passer au moins une partie du faisceau lumineux réfléchi, par exemple en un matériau transparent ou translucide. Cet élément de fermeture permet de fermer l'orifice de sortie du faisceau lumineux, ce qui permet de réduire encore le bruit généré lors de la rotation du dispositif optique. Cet élément de fermeture peut ainsi être maintenu également par l'organe de maintien, comme décrit ci-dessus, ou bien surmoulé dedans ou encore surmoulé dans le manchon du support du dispositif optique. En variante, on peut envisager qu'un tel élément de fermeture est un composant optique en transmission, laissant passer le faisceau lumineux réfléchi mais pouvant créer des effets optiques, tel que des lentilles permettant de faire diverger ou converger le faisceau et, par conséquent, l'épaisseur du plan de lumière en sortie. Un tel composant optique en transmission peut être également un diffuseur pour casser la cohérence du faisceau laser et obtenir ainsi un faisceau beaucoup plus diffus, ou encore des « gratings » (réseaux) qui sont des réseaux d'éléments tels que des rayures, des lignes réfléchissantes, permettant de séparer un faisceau en de multiples faisceaux.

Ainsi, le dispositif optique lorsqu'il comporte des éléments de fermeture de ces orifices d'entrée et de sortie du faisceau lumineux présente une forte amélioration de son aérodynamisme ce qui permet de diminuer avantageusement le bruit et donc d'offrir un gain acoustique intéressant.

En outre, l'ensemble ou une partie des pièces pouvant être réalisées par moulage de matière plastique tel que du poly(téréphtalate de butylène) ou PBT, les éléments de fermeture peuvent être intégrés dans l'organe de maintien ou le manchon du support par surmoulage, ce qui simplifie encore plus la fabrication.

En particulier, le dispositif optique peut donc être constitué d'un disque sur lequel est rapporté un manchon dans lequel est monté par surmoulage un composant optique réfléchissant et qui présente à son extrémité constituant l'orifice d'entrée du dispositif optique, un élément de fermeture et au niveau de l'ouverture ménagée dans sa paroi en regard du composant optique réfléchissant constituant l'orifice de sortie du dispositif optique, un autre élément de fermeture, ces éléments de fermeture étant montés par surmoulage dans le manchon. Ce manchon comporte en outre des moyens de fixation complémentaires de moyens de fixation prévus sur le disque, tels que des moyens de vissage, des moyens d'encliquetage.

Le dispositif optique tel que décrit ci-dessus peut être installé dans un dispositif d'éclairage pour convertir lors de son entraînement en rotation, un faisceau lumineux émis par une source prévue dans le dispositif d'éclairage en une surface lumineuse, de sorte qu'après entrée dans le dispositif optique par l'axe de rotation de celui-ci et réflexion par le composant optique réfléchissant, chaque faisceau lumineux se propage dans son cône de lumière selon une direction qui dépend de préférence d'une position angulaire du composant optique réfléchissant autour de son axe de rotation.

De plus, un tel dispositif optique présente l'avantage d'être d'un entretien aisé au cours de son utilisation. En effet, l'assemblage de ce dispositif optique étant purement mécanique, il est aisément démontable et remontable ce qui permet d'assurer facilement son entretien et/ou le remplacement des pièces le constituant en cas de nécessité, puisque les différents éléments le constituant peuvent facilement être démontés pour être réparés ou changés en cas de besoin. En outre, un dispositif optique selon l'invention présente une fiabilité dans sa réalisation qui permet d'utiliser en tant que composant optique réfléchissant, un miroir plan de grand diamètre pour balayer un faisceau plus gros, par exemple un diamètre de 24mm, ou plus encore.

Selon un deuxième aspect de l'invention, celle-ci a également pour objet un module comportant un dispositif optique du type comprenant un support avec un composant optique réfléchissant et un moteur d'entraînement en rotation du support, caractérisé en ce qu'il comporte un capot de protection pourvu d'un fond, le dispositif optique étant fixé par son moteur sur le fond du capot, avec les orifices d'entrée et de sortie d'un faisceau lumineux du dispositif, en saillie dudit capot de protection, le module comportant en outre fixés dedans des moyens de contrôle du moteur.

Ainsi, l'invention propose également un module constitué d'un capot de protection dans lequel le dispositif optique et les moyens de contrôle dudit dispositif optique sont fixés, ce qui permet de les monter facilement dans un dispositif d'éclairage sous forme d'un ensemble unitaire, prêt à l'utilisation.

De préférence, les moyens de contrôle sont agencés pour contrôler et commander le moteur et de ce fait l'entraînement en rotation du dispositif optique comportant le composant optique réfléchissant autour de son axe à une vitesse de rotation constante ou non.

Ces moyens de contrôle sont, en particulier, agencés pour commander une rotation du composant optique réfléchissant autour de son axe à une vitesse de rotation supérieure à un seuil de vitesse, de sorte que chaque source de lumière associée n'émette son faisceau lumineux que lorsque le composant optique réfléchissant a atteint une vitesse de rotation supérieure à ce seuil de vitesse.

De manière préférée, le dispositif optique dans le module optique est un dispositif optique tel que décrit ci-dessus.

De manière préférée, les moyens de contrôle comprennent une carte électronique ou PCB (acronyme anglais pour « printed circuit board », c'est-à-dire plaque de circuit imprimé) généralement constitué d'un support, en général une plaque, permettant de maintenir et de relier électriquement un ensemble de composants électroniques entre eux, dans le but de réaliser un circuit électronique complexe, dans le cas présent les moyens de contrôle du moteur.

De préférence, cette carte présente une forme complémentaire au capot et est fixée sur un rebord entourant le fond du capot, de manière écartée du fond du capot. Le capot de protection comporte ainsi des moyens de contrôle du moteur, comprenant une carte électronique présentant un orifice central engagé autour du moteur du dispositif optique et fixée dans le capot de protection de sorte qu'une face est en regard du fond du capot de protection, écartée de celui-ci, les deux faces de la carte pouvant porter des composants de contrôle du moteur et des câbles de commande et/ou d'alimentation. Sur la face de la carte opposée au capot de protection, le dispositif optique est en saillie, de sorte qu'un écart est prévu entre ladite face de la carte et le disque du support du dispositif optique.

De préférence, les moyens de contrôle comprennent des moyens de mesure de la vitesse de rotation en temps réel et de la position angulaire du dispositif optique.

Ces moyens comprennent un premier émetteur et un premier récepteur infrarouge portés par la carte de sorte à émettre un rayonnement infrarouge en direction d'une surface du support, telle qu'une face du disque du support. A cet effet, la face du disque du support, de préférence celle ne comportant pas le manchon, comporte une zone réfléchissante unique, sous forme d'un segment appartenant à une piste circulaire, cette zone réfléchissante de très courte longueur permettant de déterminer la position angulaire de référence du dispositif optique (sorte d'origine) et la vitesse du dispositif et donc du moteur, une fois par tour par réflexion d'un rayonnement infrarouge.

De manière à augmenter la précision de cette mesure, on prévoit un second émetteur et un second récepteur infrarouge portés par la carte de sorte à émettre un rayonnement infrarouge en direction d'une surface du support, telle qu'une face du disque du support. La face du disque présente une alternance de zones réfléchissantes et de zones non réfléchissantes pour former une seconde piste circulaire, concentrique à la première, permettant de mesurer la vitesse de rotation du support avec plus de précisions par réflexion d'un rayonnement infrarouge.

Ainsi, on réalise sur une face du disque du support, une piste comportant une alternance de zones réfléchissantes (dites brillantes), réalisées sous forme de fentes gravées, et non réfléchissantes (dites mates), permettant ainsi un renvoi du faisceau IR vers le récepteur IR permettant la mesure de la vitesse de rotation du disque, du composant optique réfléchissante et donc du moteur. La face du disque pourvue des deux pistes est de préférence celle en regard de la carte et donc du rayonnement infrarouge des émetteurs-récepteurs IR portés par cette carte.

De manière avantageuse, on obtient ainsi une information sur la vitesse de rotation beaucoup plus précise que dans les dispositifs optiques existants. Il est alors possible de commander les sources lumineuses d'un dispositif d'éclairage en relation avec cette vitesse avec une plus grande précision ce qui confère une stabilité des effets de lumière en sortie de système parfaite.

Ces moyens de mesure de la vitesse de rotation et de la position angulaire récupèrent ainsi un flux lumineux IR sur l'une des pistes une fois par tour ce qui permet d'avoir un point d'origine dans la nappe de lumière, et sur l'autre piste un flux lumineux autant de fois qu'il y a de zones réfléchissantes.

Les mesures effectuées sont traitées par les moyens de contrôle pour gérer notamment la vitesse de rotation du dispositif optique.

Le module selon l'invention permet d'entraîner en rotation un composant optique réfléchissant avec une précision permettant de ne pas avoir de faisceau qui tremble.

Le dispositif optique est ainsi également en saillie du capot de protection ouvert. Ce capot de protection renfermant la carte électronique et le dispositif optique constitue un module pouvant notamment être installé dans un dispositif d'éclairage tel que celui décrit dans le brevet FR-B-3 006 454.

Un dispositif d'éclairage de ce type comprend un espace clos délimité au moins en partie par des parois transparentes, dans lequel est prévu un système réflecteur agencé pour recevoir chaque faisceau lumineux en provenance du dispositif optique, se propageant dans une surface lumineuse en cône ou plan. Un tel système réflecteur est agencé pour se déplacer entre plusieurs positions de sorte qu'un changement de position du système réflecteur modifie la trajectoire d'un faisceau lumineux réfléchi par le système réflecteur.

Un dispositif d'éclairage peut également comprendre un injecteur agencé pour injecter dans l'espace clos des éléments en suspension agencés pour diffuser la lumière de chaque faisceau lumineux. Les éléments en suspension comprennent par exemple de la fumée, des gouttelettes (par exemple des gouttelettes d'eau), ou un aérosol.

Les moyens de contrôle prévus dans le module sont en outre agencés pour être reliés aux moyens de commande du dispositif d'éclairage tel qu'un circuit imprimé qui permet de connecter entre elles : les sources lumineuses, l'injecteur, le moteur d'entraînement en rotation du dispositif optique, les émetteurs/récepteurs infrarouge des moyens de mesure de la rotation et de la position angulaire du dispositif optique, le ou les systèmes de réflecteurs.

Selon un mode de réalisation de l'invention, le capot de protection comprend des moyens de fixation dudit module dans un dispositif d'éclairage, fixés à une extrémité dans le capot de protection et à leur extrémité opposée sur un élément du dispositif d'éclairage et maintenant un écart entre ledit capot de protection et ledit élément, écart dans lequel le dispositif optique est en saillie, ces moyens de fixation étant tels que des pieds en un matériau transparent, une paroi latérale en un matériau transparent formant une couronne transparente.

Selon un mode de réalisation particulièrement avantageux de l'invention, le module comprend en outre une partie socle de fixation, reliée au capot de protection comportant le dispositif optique. On a ainsi un module pouvant être installé facilement au sein d'un dispositif d'éclairage, par simple pose dudit module, celui-ci intégrant tous les éléments nécessaires à la mise en oeuvre des effets visuels souhaitées.

De plus, il est aisé d'intervenir en cas de nécessité sur un module car il est facilement démontable et re-montable, et que les différents éléments le constituant peuvent facilement être démontés pour être réparés ou changés en cas de besoin.

De manière avantageuse, la partie socle du module de fixation comprend un puits central permettant le passage du faisceau lumineux vers le dispositif optique se trouvant positionné au-dessus de la partie socle de fixation, des moyens de liaison étant prévus s'étendant entre le capot de protection et la partie socle de fixation et maintenant un écart entre ledit capot de protection et le socle de fixation, écart dans lequel le dispositif optique est en saillie.

Ces moyens de liaison sont constitués de préférence de pieds fixés à une extrémité dans le capot de protection et à leur extrémité opposée dans la partie socle de fixation. A la place de ces pieds, on peut envisager de mettre en place en tant que moyens de liaison entre la partie socle du module et la partie supérieure optique du module optique, une paroi latérale en un matériau transparent formant une couronne transparente s'étendant entre la partie optique du module et la partie socle de ce module. On peut également envisager que les pieds soient réalisés en matériau plastique transparent.

Selon un troisième aspect de l'invention, l'invention concerne également un dispositif d'éclairage pour générer des effets de lumière comprenant au moins une source agencée pour émettre un faisceau lumineux, un dispositif optique agencé pour envoyer chaque faisceau lumineux à partir d'une zone centrale dans plusieurs directions possibles contenues dans un cône de lumière dont le sommet est situé dans la zone centrale, de sorte que chaque faisceau lumineux se propage dans son cône de lumière et un système réflecteur agencé pour recevoir chaque faisceau lumineux se propageant dans son cône de lumière et pour réfléchir dans un espace chaque faisceau lumineux reçu, ledit système réflecteur étant agencé pour se déplacer entre plusieurs positions de sorte qu'un changement de position modifie la trajectoire d'un faisceau lumineux réfléchi par le système réflecteur, dans lequel le dispositif optique est un dispositif optique selon invention ou qui comprend un module selon l'invention.

D'autres avantages et particularités de l'invention apparaîtront à la lecture de la description détaillée de modes de réalisation nullement limitatifs, et des dessins annexés suivants dans lesquels les figures représentent :

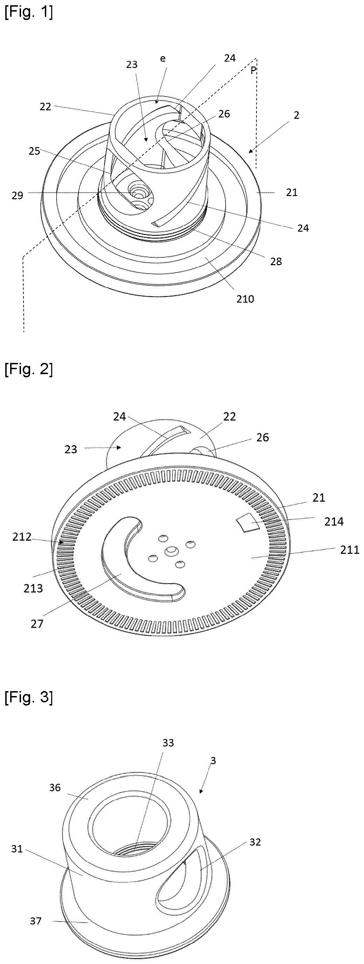

[Fig. 1] une vue en perspective du dessus d'un premier élément d'un dispositif optique selon un mode de réalisation de l'invention ;
[Fig. 2] une vue en perspective du dessous de l'élément selon la figure 1,
[Fig. 3] une vue en perspective du dessus d'un deuxième élément du dispositif optique selon un mode de réalisation de l'invention,
[Fig. 4] une vue en perspective du dessous de l'élément selon la figure 3,
[Fig. 5] une vue en éclatée en perspective latérale du dessous d'un dispositif optique selon l'invention ;
[Fig. 6] une vue en coupe du dispositif de la figure 5 ;
[Fig. 7] une vue en coupe d'un module selon l'invention ;
[Fig. 8] une vue en perspective éclaté du module de la figure 7;
[Fig. 9] une vue en coupe des systèmes de sécurité du module selon l'invention ;
[Fig. 10] une vue en coupe d'un dispositif lumineux comportant un module optique selon l'invention.

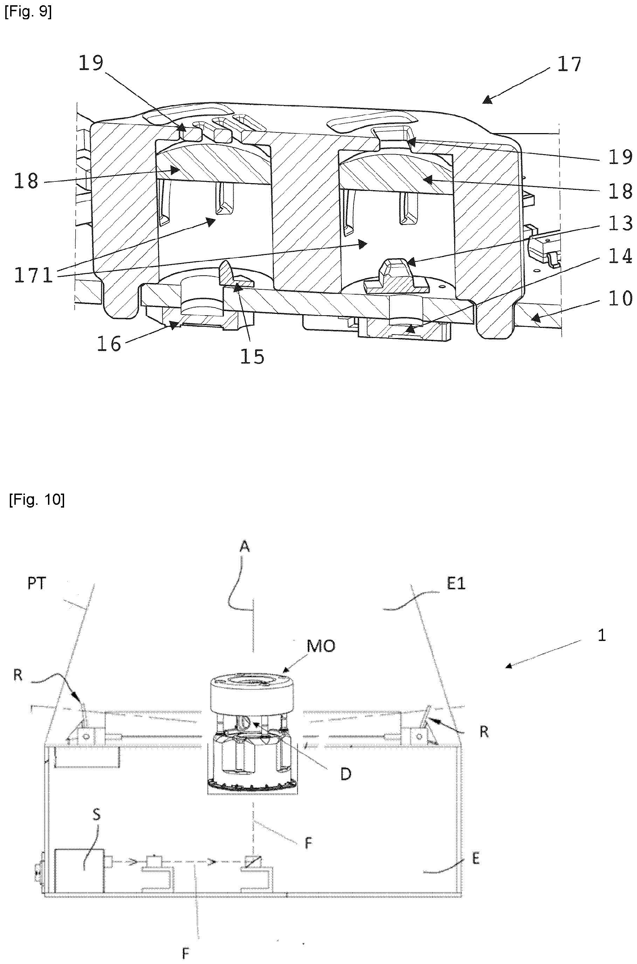

On va tout d'abord décrire, en référence aux figures, un dispositif optique D selon un mode de réalisation de l'invention, destiné à être utilisé dans un dispositif d'éclairage 1 pour générer des effets de lumière. Ce dispositif d'éclairage 1 est donné à titre d'exemple et représenté à la figure 10.

Le dispositif d'éclairage 1 comprend, dans un espace E, au moins une source S agencée pour émettre un faisceau lumineux F spécifique à cette source S. La source S comprend un laser ou une diode électroluminescente. Le dispositif 1 peut comprendre en outre des moyens optomécaniques (par exemple des cubes dichroïques) pour superposer et acheminer, jusqu'à un dispositif optique D, les chemins optiques des faisceaux lumineux F émis par les sources.

Le dispositif optique D est agencé pour envoyer chaque faisceau lumineux F à partir d'une zone centrale et plus exactement à partir d'un composant optique réfléchissant 4 (situé dans cette zone centrale) réfléchissant à 90° dans plusieurs directions possibles contenues dans un plan appelé « plan de lumière » spécifique à ce faisceau de sorte que chaque faisceau lumineux se propage dans son plan de lumière vers un système réflecteur R.

Le dispositif optique D selon l'invention comprend donc un composant optique réfléchissant 4. Ce composant optique réfléchissant 4 est constitué, dans l'exemple représenté, d'un miroir monté en rotation dans la zone centrale autour d'un axe A (de préférence perpendiculaire au plan de lumière de chaque faisceau lumineux F), cette rotation étant actionnée par un moteur 5. Ce miroir 4 est agencé pour réfléchir chaque faisceau lumineux F de sorte qu'après réflexion par le miroir 4, chaque faisceau lumineux F se propage dans son plan de lumière selon une direction qui dépend de la position angulaire du miroir 4 autour de l'axe de rotation A.

Le dispositif optique D est agencé pour que cette direction d'un faisceau lumineux explore toutes les orientations à 360 degrés autour de la zone centrale (i.e. autour de la surface réfléchissante 4 ou autour de l'axe A) lorsque que le miroir 4 fait un tour complet autour de son axe A et que ce faisceau lumineux F est émis par sa source S pendant ce tour complet.

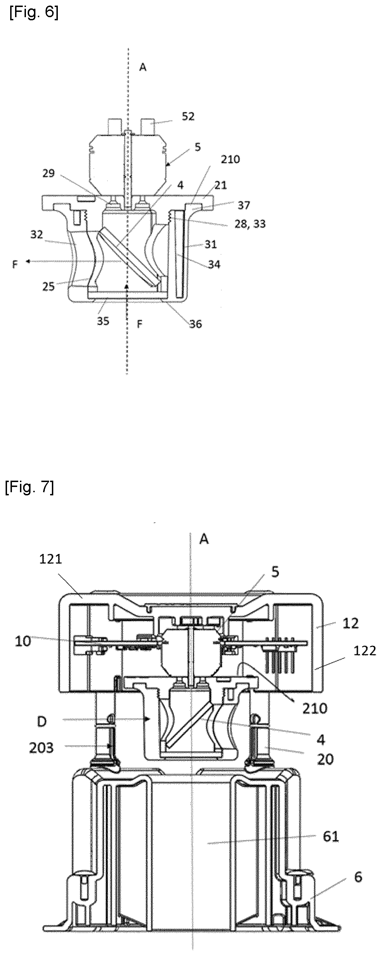

Le dispositif optique D selon l'invention comprend un support 2 comprenant le composant optique réfléchissant 4 et le moteur 5 comme on peut le voir à la figure 6.

Le support 2 comprend un disque 21 et un manchon 23. Le disque 21 est pourvu sur une face d'une paroi circulaire 22 se dressant en saillie depuis ladite face et définissant le manchon 23 coaxial avec l'axe central du disque 21. Dans cet exemple, le diamètre du disque 21 est supérieur au diamètre extérieur du manchon 23. Le manchon 23 présente ainsi une extrémité ouverte définissant l'entrée e du dispositif optique et une extrémité fermée par le disque 21.

Au niveau de la paroi circulaire 22 du manchon sont ménagées identiques et diamétralement opposées deux ouvertures telles que deux fentes 24. Ces fentes 24 constituent des moyens de logement par coopération de forme pour le composant optique réfléchissant 4, ici un miroir plan. Le miroir 4 est ainsi monté dans le support 2 par l'intermédiaire des fentes 24. La forme et les dimensions des fentes 24 sont telles que la longueur des fentes 24 permet l'insertion du miroir plan 4 et leur largeur correspond à l'épaisseur dudit miroir 4, le miroir 4 s'étendant en travers du manchon 23 et maintenu bloqué dans les fentes 24.

Ces fentes 24 sont ménagées identiques en symétrie orthogonale par rapport à un plan longitudinal médian P passant dans le manchon 23. Elles sont inclinées de sorte que le miroir 4 logé entre les fentes 24 s'étend dans le manchon 23 de manière à présenter une inclinaison à 45° par rapport au disque 21 du support 2.

Ainsi, un faisceau lumineux F entrant par l'extrémité ouverte du manchon 23 est réfléchi à 90° par le miroir 4, incliné à 45° (cf. figure 6), pour sortir par un orifice formant ouverture de sortie 25 ménagé dans la paroi 22 du manchon 23.

De manière à maintenir le composant optique réfléchissant 4 dans le support 2, celui-ci comprend un organe de maintien 3, constitué dans l'exemple représenté d'un manchon de maintien 31 dont le diamètre intérieur correspond au diamètre extérieur du manchon 23 du support 2. L'organe de maintien 3 comprend en outre des moyens de fixation complémentaires de moyens de fixation ménagés sur le support 2.

Ainsi, le manchon de maintien 31 du capot de maintien 3 est engageable sur le manchon 23 et une fois mis en place et fixé sur le manchon 23, il bloque en translation le miroir 4 qui, logé dans les fentes 24 du manchon 23, y est ainsi immobilisé et retenu.

L'organe de maintien 3 comprend également un orifice 32 ménagé dans sa paroi circulaire et qui est mis en correspondance avec l'ouverture de sortie 25 du faisceau lumineux réfléchi par le miroir 4, lorsqu'il est fixé sur le support 2.

Lors de la mise en oeuvre d'un tel dispositif optique D, on se trouve confronté à des problématiques liées à l'entraînement en rotation du support 2 de la surface réfléchissante 4. En effet, il convient d'éviter un déséquilibre lors de l'entraînement en rotation du dispositif D. De manière à permettre une répartition de la masse correcte autour de l'axe de rotation A et éviter ainsi un déséquilibre lors de l'entraînement en rotation du dispositif optique D, on ménage des retraits de matière pour garantir un équilibre dans le dispositif lors de l'entraînement en rotation.

Ainsi, pour équilibrer le support 2, le manchon 23 présente un deuxième orifice (ouverture) 26 ménagé dans la paroi 22 sensiblement diamétralement opposé à l'orifice de sortie 25. Puis, en fonction de la densité de la matière utilisée pour fabriquer le support 2, on peut ménager des retraits de matière à différents emplacements dudit support 2 comme par exemple sur la face 211 du disque sous forme d'un retrait de matière 27, obtenu lors du moulage de la pièce par exemple ou par usinage de la pièce.

Selon une forme de réalisation préférée de l'invention, comme représenté à la figure 6, les moyens de fixation prévus sur le support 2 et sur l'organe de maintien 3 permettent le vissage de l'organe de maintien 3 sur le support 2.

Ainsi, le manchon 31 présente un taraudage 33 ménagé sur sa face intérieure à son extrémité venant se loger contre le disque 21 et agencé pour s'engager sur un filet 28 ménagé sur la face extérieure du manchon 23, de préférence à la base du manchon 23 sur le disque 21.

Le dispositif optique D selon l'invention est ainsi assemblé, sans qu'il soit nécessaire d'utiliser de la colle. De ce fait, il est possible de prévoir un support 2 et un organe de maintien 3 présentant des retraits de matière permettant l'équilibrage du dispositif optique D lorsque celui-ci est entraîné en rotation, l'absence d'ajout de colle permettant de prévoir l'équilibrage de la pièce sans que celle-ci ne nécessite de reprise ultérieure comme cela était le cas pour les dispositifs optiques assemblés avec de la colle.

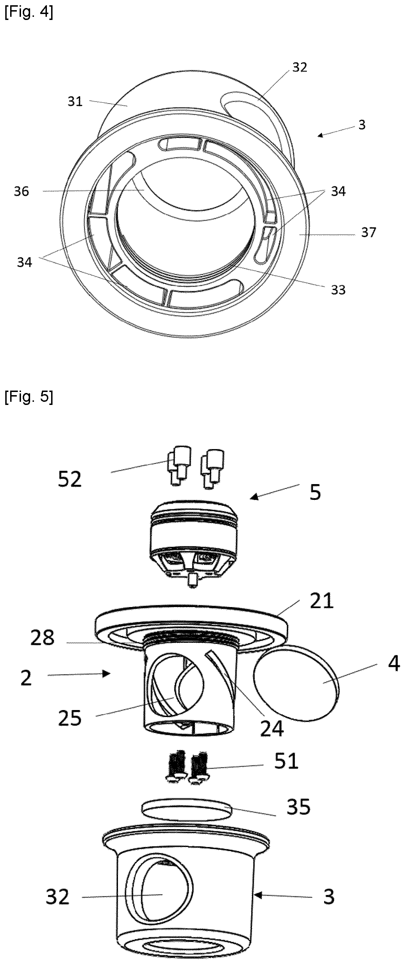

En particulier, le manchon 31 de l'organe de maintien 3 peut également présenter des évidements 34 ménagés dans sa paroi comme cela est visible sur la figure 4, ces parties creuses 34 ménagées dans la paroi du manchon de maintien 31 permettent lorsque que celui-ci est monté sur le manchon 23 de constituer un dispositif optique qui, lors de son entraînement en rotation, ne présente pas de déséquilibre.

De plus, l'organe de maintien 3 présente à son extrémité du manchon 31, une collerette 37 en saillie radiale destinée à reposer contre le disque 21 autour du manchon 23 du support 2, une fois l'organe de maintien 3 mis en place. De préférence, le disque 21 présente une rainure 210 à la base du manchon 23, dans laquelle la collerette 37 de l'organe 3 est logeable. De manière avantageuse, le dispositif optique D ainsi réalisé, lorsqu'il est monté sur un moteur, peut être entraîné en rotation à grande vitesse sans générer de bruits trop importants.

En effet, on permet ainsi que le dispositif optique D présente une surface continue sans arête vive, ce qui permet d'éviter des perturbations aérodynamiques lors de la rotation du dispositif D qui pourraient engendrer des bruits trop importants et gênants. De même, le congé entre la collerette 37 et le manchon 31 est épais ce qui permet une rigidification de l'ensemble ainsi formé.

De manière avantageuse, l'extrémité d'entrée du dispositif optique D est fermée à l'aide d'un élément de fermeture, par exemple en matériau transparent, 35 laissant passer le faisceau lumineux F émis par une source S, tel qu'un faisceau laser. En effet, on évite ainsi toute circulation d'air entrant par cette extrémité ouverte du dispositif D et ressortant par l'orifice de sortie 32/25 du dispositif ménagé pour le faisceau lumineux réfléchi, ce qui pourrait engendrer un soufflement et un bruit trop importants. Cet élément de fermeture se présente sous forme d'un disque 35 maintenu en place lors de la mise en place de l'organe de maintien 3 sur le manchon 23 du support 2. A cet effet, l'extrémité du manchon 31 opposée à celle pourvue des moyens de fixation présente un rebord 36 en saillie radiale formant un moyen de retenue du disque 35 contre l'extrémité du manchon 23.

Un tel élément de fermeture 35 peut être avantageusement remplacé par un composant optique en transmission laissant passer le faisceau lumineux émis par une source mais qui pourrait créer des effets divers, comme par exemple des lentilles permettant de faire diverger ou converger le faisceau et, par conséquent, l'épaisseur du plan de lumière en sortie. Un tel composant optique pourrait être également un diffuseur pour casser la cohérence du faisceau laser et obtenir ainsi un faisceau beaucoup plus diffus, ou encore des « gratings » (réseaux) qui sont des réseaux d'éléments tels que des rayures, des lignes réfléchissantes, permettant de séparer un faisceau en de multiples faisceaux.

De même, on peut prévoir un élément ou composant optique en transmission, de fermeture monté sur l'orifice de sortie du dispositif optique 25/32 du faisceau lumineux après réflexion, afin de rajouter des effets potentiels, et/ou permettre de réduire encore le bruit généré lors de la rotation du dispositif optique D. Ces éléments de fermeture peuvent, par exemple, être surmoulés dans l'organe de maintien 3.

Le support 2 est monté sur le moteur 5 à l'aide de moyens de fixation appropriés tels que des vis 51 engagées au travers d'orifices 29 ménagés dans le disque 21.

Un tel dispositif optique D selon l'invention est donc destiné à être utilisé dans le dispositif lumineux 1 décrit ci-dessus.

Le composant optique réfléchissant ou miroir 4 du dispositif optique D est ainsi monté en rotation autour d'un axe A (de préférence perpendiculaire au plan de lumière de chaque faisceau lumineux), cette rotation étant actionnée par le moteur 5.

Ce miroir 4 est agencé pour réfléchir chaque faisceau lumineux de sorte qu'après réflexion par le miroir 4 chaque faisceau lumineux se propage dans son plan de lumière selon une direction qui dépend d'une position angulaire du miroir 4 autour de son axe A.

Le dispositif optique D est agencé pour que cette direction d'un faisceau lumineux explore toutes les orientations à 360 degrés autour de la zone centrale (i.e. autour du miroir 4 ou autour de l'axe A) lorsque le miroir 4 fait un tour complet autour de son axe A et que ce faisceau lumineux est émis par sa source pendant ce tour complet.

Selon un second aspect de l'invention, un dispositif optique D tel que celui précédemment décrit ou un autre est avantageusement intégré dans un module MO intégrable dans un dispositif d'éclairage 1.

A cet effet, le dispositif optique D est monté dans un capot de protection 12, qui présente un fond 121 et un rebord périphérique 122 s'étendant perpendiculairement au fond 121.

Le dispositif optique D est monté dans le capot 12, fixé par son moteur 5 et des éléments amortisseurs 52 venant en appui avec le fond 121 du capot de protection 12 pour absorber les chocs, les vibrations et les bruits en maintenant les différents éléments ensemble.

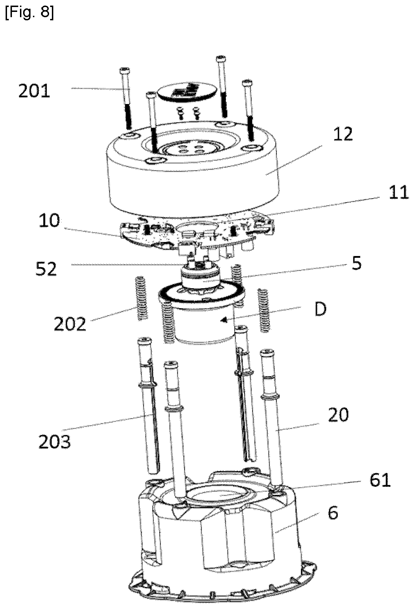

Le capot de protection 12 loge en outre les moyens de contrôle du moteur constitué d'une carte électronique 10 de section identique à la section du capot de protection 12 et fixée au rebord latéral 122. Cette carte 10 présente un orifice central 11 dans lequel est logé le moteur 5, de telle sorte qu'une partie du moteur 5 et le dispositif optique D sont en saillie sur une face de ladite carte 10 comme cela est visible sur les figures 7 et 8.

Cette carte 10 et le dispositif optique D sont logés dans un capot de protection 12 de sorte que les orifices d'entrée et de sortie du faisceau lumineux du dispositif optique soient en saillie du capot de protection 12, notamment au-delà du rebord 122, pour permettre la propagation du faisceau lumineux réfléchi F.

Cette carte 10 comporte avantageusement les moyens de contrôle du moteur, logés dans l'espace entre la carte 10 et le fond 121 du capot de protection 12, ou sur l'autre face de la carte 10, un écart existant également entre cette face de la carte 10 et le disque 21 du dispositif optique D.

Les moyens de contrôle sont agencés pour commander une rotation du miroir 4 autour de son axe A à une vitesse de rotation (ou « vitesse de balayage ») constante ou non (ou au moins comprise dans un faible intervalle de valeur typiquement à plus ou moins 5% par rapport à une valeur moyenne dans le temps), (typiquement égale à 20400 tours par minute), et supérieure à un seuil de vitesse.

De préférence, on prévoit des moyens de mesure de la vitesse de rotation et de la position angulaire du miroir 4, constituant un système de sécurité, utilisant un émetteur 13 et un récepteur 14 infrarouge reliés aux moyens de contrôle pour connaitre la vitesse de rotation en temps réel du dispositif optique D. Ainsi, si la vitesse devenait trop faible (en dessous du seuil de vitesse), les sources S sont automatiquement éteintes, et on améliore ainsi la sécurité du dispositif lumineux 1. En outre, en privilégiant une vitesse constante, on évite de passer par des « points morts » de vitesse, et on améliore la sécurité.

Le premier émetteur 13/récepteur 14 infrarouge est agencé pour permettre de connaître la vitesse de rotation et la position angulaire. On prévoit avantageusement des seconds moyens de mesure de la vitesse de rotation constitués de seconds émetteur 15 et récepteur 16 infrarouge qui permettent d'augmenter la précision de la mesure de la vitesse ce qui permet d'obtenir des effets stables car on peut ainsi déterminer quand allumer et éteindre les faisceaux lumineux dans le tour pour créer des faisceaux fixes de lumière.

Ainsi, le premier émetteur 13/récepteur 14 infrarouge émet un rayonnement infrarouge en direction de la face 211 du disque 21 qui comporte en regard une unique zone réfléchissante sous forme d'un segment 214 appartenant à une première piste circulaire, cette zone réfléchissante 214 de très courte longueur permettant de déterminer la position angulaire du dispositif optique D et de mesurer la vitesse de rotation sur un tour.

Le second émetteur 15/récepteur 16 infrarouge est porté par la carte 10 de sorte à émettre un rayonnement infrarouge (IR) en direction de la face 211 du disque 21 du support 2, celle-ci comportant en regard du rayonnement infrarouge, une alternance de zones réfléchissant ledit rayonnement infrarouge et de zones ne réfléchissant pas le rayonnement infrarouge formant une piste circulaire 212, concentrique à la piste 214, ce qui permet de mesurer avec une plus grande précision la vitesse de rotation. Par exemple, on peut ménager des gravures 213 sur ladite face 211 pour former des surfaces réfléchissantes, par exemple 256 gravures par tour.

Ce système de mesure récupère ainsi un flux lumineux IR sur la piste 214 une fois par tour ce qui permet d'avoir un point d'origine dans la nappe de lumière et une vitesse par tour, et sur l'autre piste 212 un flux lumineux autant de fois qu'il y a de surfaces réfléchissantes 213.

On obtient ainsi une information sur la vitesse de rotation beaucoup plus précise que les dispositifs optiques existants. Il est alors possible de commander les sources lumineuses S en relation avec cette vitesse avec une plus grande précision ce qui confère une stabilité des effets de lumière en sortie de système parfaite.

Ces moyens de mesure sont donc constitués de deux émetteur/récepteurs IR qui peuvent être montés sur la carte 10 par soudage et d'une pièce plastique 17 qui se fixe sur la carte 10, par exemple à l'aide d'un clip. Cette pièce 17 présente deux logements 171 dans chacun desquels est montée une lentille 18 et un masque de fentes 19, chaque logement 171 est en outre associé à un émetteur/récepteur 13,14 ; 15,16 infrarouge et à une piste 212, 214 du disque 21.

Les informations récupérées par les moyens de mesure sont traitées par le système de commande et de contrôle qui peut ainsi gérer la vitesse du dispositif optique D ainsi que les sources lumineuses S.

En effet, la modulation sur les sources lasers permet de réaliser des « barreaux » de lumière, dont le nombre varie en fonction du rapport entre la fréquence du signal carré envoyé à la modulation et la vitesse de rotation. En ayant connaissant de la position angulaire dans le plan à 360° autour de la zone centrale, on peut contrôler de manière exacte la position des « barreaux » créés.

Le capot de protection 12 muni du dispositif optique D forme un module MO et comporte en outre des moyens de liaison tels que des pieds 20 lui permettant de se fixer soit directement sur un élément du dispositif d'éclairage 1 tel qu'une plaque séparant l'espace E de l'espace au-dessus E1, soit sur une partie inférieure du module qui constitue une partie socle de fixation 6 constituant avec le dispositif optique également un module MO.

La partie socle 6 du module optique MO présente un puits central 61 aligné avec l'entrée du manchon 23 du dispositif optique D, permettant ainsi le passage d'un faisceau lumineux F vers le dispositif optique D du module MO ainsi que des moyens permettant la fixation des moyens de liaison 20 du module optique.

De manière avantageuse, cette partie socle 6 étant alignée avec le dispositif optique D, elle sert d'élément de centrage pour positionner et fixer le module MO dans un dispositif d'éclairage tel que décrit ci-dessus, le centrage d'un tel module permettant le centrage du faisceau laser F sans nécessité d'étape d'alignement complémentaire.

Selon l'exemple représenté, le module MO comporte, en tant que moyens de liaison quatre pieds 20 s'étendant entre le capot de protection 12 et la partie socle de fixation 6 du module MO.

Ces pieds 20 génèrent des fuites dans le plan laser, ainsi avec quatre pieds 20 comme dans cet exemple, il y aura quatre trous dans le plan de lumière. Ceci peut être intéressant dans un dispositif lumineux où le nombre de réflecteurs latéraux est un multiple de 4. Bien entendu, il est possible de prévoir un nombre de pieds 20 différent.

La partie socle de fixation 6 du module est installée sur une plaque séparant l'espace E dans lequel se trouve les sources lumineuses S et l'espace E1 dans lequel se trouve le dispositif optique D comme on peut le voir à la figure 10.

De préférence, les pieds 20 sont creux et dans leur partie s'étendant au niveau du capot de protection 12, on met en place des vis 201 associées à des ressorts 202 logés en butée dans les pieds 20. Ces ressorts 202 permettent de garder en tensions les vis 201 accessibles au travers du capot de protection 12 ce qui permet un ajustement de la position angulaire du capot de protection 12 et donc du moteur 5. Ceci permet dans le module fini assemblé de pouvoir régler et ajuster l'orientation du plan de lumière.

Dans la partie de pieds 20 au-dessous des ressorts 202, au moins une fente longitudinale 203 est prévue pour permettre le passage de fils d'alimentation électrique agencés pour alimenter le moteur 5 et provenant de l'espace E ou pour laisser passer les fils de connexion entre les moyens de de contrôle du module MO et des moyens de commande du dispositif d'éclairage.

Le dispositif 1 comprend en outre un système réflecteur R agencé pour recevoir chaque faisceau lumineux en provenance du module optique MO et se propageant dans son plan de lumière et pour réfléchir dans l'espace clos E1 (et en dehors de son plan de lumière) chaque faisceau lumineux reçu (c'est-à-dire pour renvoyer à l'intérieur de l'espace clos E1 chaque faisceau reçu).

Les moyens de contrôle du dispositif d'éclairage selon l'invention sont en outre agencés pour commander à quel moment chacune des sources S émet son faisceau lumineux, étant donné que chacune des sources S est agencée pour émettre son faisceau lumineux aussi bien de manière continue que de manière discontinue. On peut donner différentes formes des effets lumineux créés par le dispositif 1 selon les instants pendant lesquels une source donnée S émet son faisceau lumineux. On peut passer par exemple d'une figure continue à une figure filaire faite de barreaux, on peut aussi choisir la couleur des barreaux, leur épaisseur, et leur déplacement : sens de rotation, vitesse...

Grâce aux moyens de contrôle, il est ainsi possible de modifier les surfaces lumineuses en temps réel et de créer des chorégraphies lumineuses en déplaçant les miroirs du système réflecteur R à l'aide de moteurs, en jouant sur le dispositif optique D, sur la modulation et la puissance des sources S ainsi que sur l'injecteur de fumée.

Bien sûr, l'invention n'est pas limitée aux exemples qui viennent d'être décrits et de nombreux aménagements peuvent être apportés à ces exemples sans sortir du cadre de l'invention telle que définie par les revendications.

## Revendications

1. Dispositif optique (D) comprenant un support (2) monté sur un moteur d'entraînement en rotation (5) et un composant optique réfléchissant (4), le support (2) comprenant au moins un manchon (23) coaxial avec l'axe d'entraînement en rotation, manchon (23) dont une extrémité définit un orifice d'entrée et qui comporte dans sa paroi une ouverture (25) définissant un orifice de sortie et dans lequel est logé le composant optique réfléchissant (4) de sorte qu'un faisceau lumineux (F) entrant par l'orifice d'entrée est réfléchi par le composant optique réfléchissant (4) pour sortir par l'orifice de sortie, **caractérisé en ce que** le composant optique réfléchissant (4) est monté et maintenu dans le manchon (23) par coopération de forme avec la paroi (22) dudit manchon (23).

2. Dispositif optique selon la revendication 1, **caractérisé en ce que** le support (2) comporte un disque (21) depuis une face duquel le manchon (23) se dresse en saillie, d'une seule pièce avec le disque (21), le manchon (23) étant constitué d'une paroi (22) circulaire en saillie sur la face du disque (21), définissant le manchon (23) de section circulaire.

3. Dispositif optique selon la revendication 1, **caractérisé en ce que** le support (2) comporte un disque depuis une face duquel le manchon se dresse en saillie, le manchon étant fixé sur le disque (21) par des moyens de fixation complémentaires de moyens de fixation prévus sur le disque (21).

4. Dispositif optique (D) selon l'une des revendications 1 à 3, **caractérisé en ce que** le composant optique réfléchissant (4) est choisi parmi les composants optiques réfléchissants tels qu'une surface réfléchissante tel que miroir plan, miroir concave, miroir convexe, des « gratings », réseaux, en réflexion qui sont des réseaux d'éléments tels que des rayures, des lignes réfléchissantes, permettant de séparer un faisceau en de multiples faisceaux, un diffuseur en réflexion, des composants optiques partiellement réfléchissants tels que des lames polarisante.

5. Dispositif optique selon l'une des revendications 1 à 4, **caractérisé en ce que** le manchon (23) comporte, ménagée dans sa paroi, au moins une ouverture (24) dans laquelle le composant optique réfléchissant (4) est logé et maintenu, engagé dans le manchon (23).

6. Dispositif optique (D) selon la revendication 5, **caractérisé en ce que** le manchon (23) comprend deux ouvertures (24) diamétralement opposées et identiques dans lesquelles est logé le composant optique réfléchissant (4) de manière à s'étendre dans le manchon entre ces deux ouvertures (24).

7. Dispositif (D) selon la revendication 6, **caractérisé en ce que** les ouvertures sont deux fentes (24) ménagées identiques et diamétralement opposées l'une à l'autre dans le manchon (23).

8. Dispositif optique (D) selon l'une des revendications 5 à 7, **caractérisé en ce que** le composant optique réfléchissant (4) est monté et maintenu dans le manchon, par engagement à force dans la ou les ouvertures (24).

9. Dispositif optique selon l'une des revendications 5 à 7, **caractérisé en ce que** le dispositif (D) comporte un organe de maintien (3) du composant optique (4) dans le support (2), s'étendant le long du manchon (23) pour recouvrir la ou les ouvertures (24) dans laquelle ou lesquelles le composant optique (4) est logé, l'organe de maintien (3) et le support (2) comportant respectivement des moyens de fixation complémentaires.

10. Dispositif selon la revendication 9, **caractérisé en ce que** l'organe de maintien (3) est constitué d'un manchon de maintien (31) engageable sur le manchon (23) du support pour s'étendre contre ledit manchon (23) et recouvrir la ou les deux ouvertures (24) du manchon (23) et comprenant un orifice (32) ménagé dans sa paroi circulaire pour être mis en correspondance avec l'ouverture de sortie (25) du support (2).

11. Dispositif optique (D) selon l'une des revendications 9 ou 10, **caractérisé en ce que** les moyens de fixation complémentaires de l'organe de maintien (3) et du support (2) sont constitués de moyens de vissage (33, 28), de moyens d'encliquetage tels que des clips, un système de fixation type baïonnette.

12. Dispositif optique (D) selon l'une des revendications 1 à 4, **caractérisé en ce que** le composant optique réfléchissant (4) est monté et maintenu dans le manchon, surmoulé dans la paroi du manchon.

13. Dispositif optique (D) selon l'une des revendications 1 à 12, **caractérisé en ce que** le dispositif optique (D) comporte à son orifice d'entrée du faisceau lumineux, un élément de fermeture (35) laissant passer au moins en partie le faisceau lumineux vers le composant optique réfléchissant (4).

14. Dispositif optique (D) selon l'une des revendications 1 à 13, **caractérisé en ce que** le dispositif optique (D) comporte à son orifice de sortie du faisceau lumineux, un élément de fermeture laissant passer au moins en partie le faisceau lumineux réfléchi.

15. Dispositif optique (D) selon l'une des revendications 1 à 14, **caractérisé en ce qu'**une face du disque (21) comporte une zone réfléchissante unique (214) constituée d'un segment court sur une première piste circulaire.

16. Dispositif optique (D) selon la revendication 15, **caractérisé en ce que** la face du disque (21) comporte une seconde piste circulaire de zones réfléchissantes (213) alternées avec des zones non réfléchissantes, concentrique à la première.

17. Module (Mo) comportant un dispositif optique (D) du type comprenant un support (2) avec un composant optique réfléchissant (4) et un moteur (5) d'entraînement en rotation dudit support, selon l'une des revendications 1 à 16, **caractérisé en ce qu'**il comporte un capot de protection (12) pourvu d'un fond (121) entouré d'un rebord périphérique (121), le dispositif optique (D) étant fixé par son moteur (5) sur le fond (121) du capot (12), avec les orifices d'entrée et de sortie d'un faisceau lumineux du dispositif en saillie dudit capot de protection (12).

18. Module selon la revendication 17, **caractérisé en ce que** le capot de protection (12) comporte des moyens de contrôle du moteur, comprenant une carte électronique (10) présentant un orifice central (11) engagé autour du moteur (5) du dispositif optique et fixée dans le capot de protection (12) de sorte qu'une face est en regard du fond du capot de protection, écartée de celui-ci, les deux faces de la carte (10) pouvant porter des composants de contrôle du moteur et des câbles de commande et/ou d'alimentation.

19. Module (MO) selon la revendication 18, **caractérisé en ce que** les moyens de contrôle comprennent des moyens de mesure de la vitesse de rotation en temps réel et de la position angulaire du dispositif optique (D), ces moyens comprenant un premier émetteur / récepteur infrarouge (15, 16) émettant un rayonnement infrarouge en direction d'une surface du support (2) qui comporte en regard une zone réfléchissante unique (214) sous forme d'un segment appartenant à une piste circulaire (214).

20. Module (MO) selon la revendication 19, **caractérisé en ce que** les moyens de contrôle comprennent un second émetteur / récepteur infrarouge (13, 14) de sorte à émettre un rayonnement infrarouge en direction d'une surface du support (2) présentant une alternance de zones (213) réfléchissant le rayonnement infrarouge et de zones ne réfléchissant pas le rayonnement infrarouge pour former une piste circulaire (212) concentrique à la première (214).

21. Module (MO) selon l'une des revendications 17 à 20, **caractérisé en ce que** le capot de protection (12) comprend des moyens de fixation dudit module optique (MO) dans un dispositif d'éclairage (1), fixés à une extrémité dans le capot de protection (12) et à leur extrémité opposée sur un élément du dispositif d'éclairage et maintenant un écart entre ledit capot de protection (12) et ledit élément, écart dans lequel le dispositif optique (D) est en saillie, ces moyens de fixation étant tels que des pieds (20) en un matériau transparent, une paroi latérale en un matériau transparent formant une couronne transparente.

22. Module (MO) selon l'une des revendications 17 à 20, **caractérisé en ce qu'**il comprend en outre une partie socle de fixation (6), reliée à la partie du module optique comportant le dispositif optique (D), par des moyens de liaison (20) s'étendant entre le capot de protection (12) et la partie socle de fixation (6) et maintenant un écart entre ledit capot de protection (12) et la partie socle de fixation (6), écart dans lequel le dispositif optique (D) est en saillie, ces moyens de liaison étant tels que des pieds (20) en un matériau transparent, une paroi latérale en un matériau transparent formant une couronne transparente.

23. Module (MO) selon la revendication 22, **caractérisé en ce que** la partie socle de fixation (6) du module optique (MO) comprend un puits central (61) permettant le passage d'un faisceau lumineux vers le dispositif optique (D) se trouvant positionné au-dessus de la partie socle de fixation (6).

24. Dispositif d'éclairage (1) pour générer des effets de lumière comprenant au moins une source agencée pour émettre un faisceau lumineux, un dispositif optique associé à un moteur, agencé pour envoyer chaque faisceau lumineux à partir d'une zone centrale dans plusieurs directions possibles contenues dans un cône de lumière dont le sommet est situé dans la zone centrale, de sorte que chaque faisceau lumineux se propage dans son cône de lumière et un système réflecteur agencé pour recevoir chaque faisceau lumineux se propageant dans son cône de lumière et pour réfléchir dans un espace chaque faisceau lumineux reçu, ledit système réflecteur étant agencé pour se déplacer entre plusieurs positions de sorte qu'un changement de position modifie la trajectoire d'un faisceau lumineux réfléchi par le système réflecteur, **caractérisé en ce que** le dispositif optique est un dispositif selon l'une des revendications 1 à 14.

25. Dispositif d'éclairage (1) pour générer des effets de lumière comprenant au moins une source agencée pour émettre un faisceau lumineux, un dispositif optique associé à un moteur, agencé pour envoyer chaque faisceau lumineux à partir d'une zone centrale dans plusieurs directions possibles contenues dans un cône de lumière dont le sommet est situé dans la zone centrale, de sorte que chaque faisceau lumineux se propage dans son cône de lumière et un système réflecteur agencé pour recevoir chaque faisceau lumineux se propageant dans son cône de lumière et pour réfléchir dans un espace chaque faisceau lumineux reçu, ledit système réflecteur étant agencé pour se déplacer entre plusieurs positions de sorte qu'un changement de position modifie la trajectoire d'un faisceau lumineux réfléchi par le système réflecteur, **caractérisé en ce que** le dispositif optique est un module optique selon l'une des revendications 15 à 21.

## Patentansprüche

1. Optische Vorrichtung (D), umfassend einen Träger (2), der auf einen Drehantriebsmotor (5) montiert ist, und eine reflektierende optische Komponente (4), wobei der Träger (2) wenigstens eine Hülse (23) umfasst, die koaxial zu der Achse des Drehantriebs ist, wobei ein Ende der Hülse (23) eine Eintrittsöffnung definiert und die Hülse in ihrer Wand eine Öffnung (25) umfasst, die eine Austrittsöffnung definiert, und sich darin die reflektierende optische Komponente (4) befindet, so dass ein Lichtstrahl (F), der durch die Eintrittsöffnung eintritt, von der reflektierenden optischen Komponente (4) reflektiert wird und durch die Austrittsöffnung wieder austritt, **dadurch gekennzeichnet, dass** die reflektierende optische Komponente (4) durch Formschluss mit der Wand (22) der Hülse (23) in der Hülse (23) montiert und gehalten wird.

2. Optische Vorrichtung gemäß Anspruch 1, **dadurch gekennzeichnet, dass** der Träger (2) eine Scheibe (21) umfasst, aus deren einer Fläche die einstückig mit der Scheibe (21) ausgebildete Hülse (23) herausragt, wobei die Hülse (23) aus einer kreisförmigen Wand (22) besteht, die aus der Fläche der Scheibe (21) herausragt und die Hülse (23) mit kreisförmigem Querschnitt definiert.

3. Optische Vorrichtung gemäß Anspruch 1, **dadurch gekennzeichnet, dass** der Träger (2) eine Scheibe umfasst, aus deren einer Fläche die Hülse herausragt, wobei die Hülse durch Befestigungsmittel auf der Scheibe (21) befestigt ist, die zu auf der Scheibe (21) vorgesehenen Befestigungsmitteln komplementär sind.

4. Optische Vorrichtung (D) gemäß einem der Ansprüche 1 bis 3, **dadurch gekennzeichnet, dass** die reflektierende optische Komponente (4) ausgewählt ist aus reflektierenden optischen Komponenten wie einer reflektierenden Fläche, wie einem Planspiegel, Konkavspiegel, Konvexspiegel, reflektierenden "Gittern", das sind Netze, bei denen es sich um Netze von Elementen wie Kratzern, reflektierenden Linien, handelt, die es erlauben, einen Strahl in mehrere Strahlen aufzuteilen, einem reflektierenden Diffusor, partiell reflektierenden optischen Komponenten, wie Polarisatorplatten.

5. Optische Vorrichtung gemäß einem der Ansprüche 1 bis 4, **dadurch gekennzeichnet, dass** die Hülse (23) in ihrer Wand wenigstens eine Öffnung (24) aufweist, in der sich die reflektierende optische Komponente (4) befindet und gehalten wird, welche in die Hülse (23) eingepasst ist.

6. Optische Vorrichtung (D) gemäß Anspruch 5, **dadurch gekennzeichnet, dass** die Hülse (23) zwei diametral entgegengesetzte und identische Öffnungen (24) umfasst, in denen sich die reflektierende optische Komponente (4) befindet, so dass sich diese in der Hülse zwischen diesen beiden Öffnungen (24) erstreckt.

7. Optische Vorrichtung (D) gemäß Anspruch 6, **dadurch gekennzeichnet, dass** die Öffnungen zwei Schlitze (24) sind, die identisch und einander diametral entgegengesetzt in der Hülse (23) ausgebildet sind.

8. Optische Vorrichtung (D) gemäß einem der Ansprüche 5 bis 7, **dadurch gekennzeichnet, dass** die reflektierende optische Komponente (4) kraftschlüssig in der oder den Öffnungen (24) in der Hülse montiert und gehalten wird.

9. Optische Vorrichtung gemäß einem der Ansprüche 5 bis 7, **dadurch gekennzeichnet, dass** die Vorrichtung (D) ein Halteelement (3) der optischen Komponente (4) in dem Träger (2) umfasst, das sich entlang der Hülse (23) erstreckt, um die Öffnung oder Öffnungen (24), in der oder denen sich die optische Komponente (4) befindet, abzudecken, wobei das Halteelement (3) und der Träger (2) jeweils komplementäre Befestigungsmittel umfassen.

10. Vorrichtung gemäß Anspruch 9, **dadurch gekennzeichnet, dass** das Halteelement (3) aus einer Haltehülse (31) besteht, die auf die Hülse (23) des Trägers aufgesteckt werden kann, um sich gegen die Hülse (23) zu erstrecken und die Öffnung oder die beiden Öffnungen der Hülse (23) zu bedecken, und die eine Öffnung (32) umfasst, die in seiner kreisförmigen Wand ausgebildet ist, um sie in Entsprechung mit der Austrittsöffnung (25) des Trägers (2) zu bringen.

11. Optische Vorrichtung (D) gemäß einem der Ansprüche 9 oder 10, **dadurch gekennzeichnet, dass** die komplementären Befestigungsmittel des Halteelements (3) und des Trägers (2) aus Verschraubungsmitteln (33, 28), Einrastungsmitteln, wie Clips, oder einem Befestigungssystem des Bajonetttyps bestehen.

12. Optische Vorrichtung (D) gemäß einem der Ansprüche 1 bis 4, **dadurch gekennzeichnet, dass** die reflektierende optische Komponente (4) in der Hülse montiert und gehalten wird und in der Wand der Hülse überformt wird.

13. Optische Vorrichtung (D) gemäß einem der Ansprüche 1 bis 12, **dadurch gekennzeichnet, dass** die optische Vorrichtung (D) an ihrer Eintrittsöffnung des Lichtstrahls ein Verschlusselement (35) umfasst, das wenigstens einen Teil des Lichtstrahls zur reflektierenden optischen Komponente (4) durchlässt.

14. Optische Vorrichtung (D) gemäß einem der Ansprüche 1 bis 13, **dadurch gekennzeichnet, dass** die optische Vorrichtung (D) an ihrer Austrittsöffnung des Lichtstrahls ein Verschlusselement umfasst, das wenigstens einen Teil des reflektierten Lichtstrahls durchlässt.

15. Optische Vorrichtung (D) gemäß einem der Ansprüche 1 bis 14, **dadurch gekennzeichnet, dass** eine Fläche der Scheibe (21) eine einzigen reflektierende Zone (214) umfasst, die aus einem kurzen Segment auf einer ersten kreisförmigen Bahn besteht.

16. Optische Vorrichtung (D) gemäß Anspruch 15, **dadurch gekennzeichnet, dass** die Fläche der Scheibe (21) eine zweite, zu der ersten konzentrische kreisförmige Bahn mit reflektierenden Zonen (213), die sich mit den nichtreflektierenden Zonen abwechseln, umfasst.

17. Modul (Mo), das eine optische Vorrichtung (D) des Typs umfasst, der einen Träger (2) mit einer reflektierenden optischen Komponente (4) und einen Drehantriebsmotor (5) des Trägers gemäß einem der Ansprüche 1 bis 16 umfasst, **dadurch gekennzeichnet, dass** es eine Schutzabdeckung (12) umfasst, die mit einem Unterteil (121) versehen ist, der von einem umlaufenden Rand (121) umgeben ist, wobei die optische Vorrichtung (D) durch ihren Motor (5) auf dem Unterteil (121) der Abdeckung (12) befestigt ist, wobei die Eintritts- und die Austrittsöffnung eines Lichtstrahls der Vorrichtung aus der Schutzabdeckung (12) herausragen.

18. Modul gemäß Anspruch 17, **dadurch gekennzeichnet, dass** die Schutzabdeckung (12) Einrichtungen zur Steuerung des Motors umfasst, die eine elektronische Karte (10) umfassen, welche eine zentrale Öffnung (11) aufweist, die um den Motor (5) der optischen Einrichtung herum anliegt und in der Schutzabdeckung (12) befestigt ist, so dass eine Fläche dem Unterteil der Schutzabdeckung zugewandt und von diesem beabstandet ist, wobei die zwei Flächen der Karte (10) Steuerkomponenten des Motors und Steuer-und/oder Versorgungskabel tragen können.

19. Modul (MO) gemäß Anspruch 18, **dadurch gekennzeichnet, dass** die Steuerungseinrichtungen Einrichtungen zum Messen der Drehgeschwindigkeit in Echtzeit und der Winkelposition der optischen Vorrichtung (D) umfassen, wobei diese Einrichtungen einen ersten Infrarotemitter/- empfänger (15, 16) umfassen, der eine Infrarotstrahlung in Richtung einer Fläche des Trägers (2) emittiert, die einer einzigen reflektierenden Zone (214) in Form eines Segments, das zu einer kreisförmigen Bahn (214) gehört, zugewandt ist.

20. Modul (MO) gemäß Anspruch 19, **dadurch gekennzeichnet, dass** die Steuerungseinrichtungen einen zweiten Infrarotemitter/-empfänger (13, 14) umfassen, so dass eine Infrarotstrahlung in Richtung einer Fläche des Trägers (2) emittiert wird, der abwechselnd Zonen (213), die die Infrarotstrahlung reflektieren, und Zonen, die die Infrarotstrahlung nicht reflektieren, aufweist, um eine kreisförmige Bahn (212) zu bilden, die zu der ersten (214) konzentrisch ist.

21. Modul (MO) gemäß einem der Ansprüche 17 bis 20, **dadurch gekennzeichnet, dass** die Schutzabdeckung (12) Befestigungsmittel des optischen Moduls (MO) in einer Beleuchtungsvorrichtung (1) umfasst, die an einem Ende in der Schutzabdeckung (12) und an ihrem entgegengesetzten Ende an einem Element der Beleuchtungsvorrichtung befestigt sind und einen Abstand zwischen der Schutzabdeckung (12) und dem Element aufrechterhalten, wobei die optische Vorrichtung (D) in diesem Abstand herausragt, wobei es sich bei diesen Befestigungsmitteln um solche wie Füße (20) aus einem transparenten Material oder eine Seitenwand aus einem transparenten Material, die eine transparente Krone bildet, handelt.

22. Modul (MO) gemäß einem der Ansprüche 17 bis 20, **dadurch gekennzeichnet, dass** es weiterhin einen Befestigungssockelteil (6) umfasst, der mit dem Teil des optischen Moduls, der die optische Vorrichtung (D) umfasst, durch Verbindungsmittel (20) verbunden ist, die sich zwischen der Schutzabdeckung (12) und dem Sockelteil der Befestigung (6) erstrecken und einen Abstand zwischen der Schutzabdeckung (12) und dem Sockelteil der Befestigung (6) aufrechterhalten, wobei die optische Vorrichtung (D) in diesem Abstand herausragt, wobei es sich bei diesen Verbindungsmitteln um solche wie Füße (20) aus einem transparenten Material oder eine Seitenwand aus einem transparenten Material, die eine transparente Krone bildet, handelt.

23. Modul (MO) gemäß Anspruch 22, **dadurch gekennzeichnet, dass** der Sockelteil der Befestigung (6) des optischen Moduls (MO) einen zentralen Schacht (61) umfasst, der das Durchlassen eines Lichtstrahls zur optischen Vorrichtung (D) erlaubt, die sich oberhalb des Sockelteils der Befestigung (6) befindet.

24. Beleuchtungsvorrichtung (1) zum Erzeugen von Lichteffekten, umfassend wenigstens eine Quelle, die so konfiguriert ist, dass sie einen Lichtstrahl emittieren kann, eine optische Vorrichtung, die mit einem Motor assoziiert ist und so konfiguriert ist, dass sie jeden Lichtstrahl ausgehend von einer zentralen Zone in mehrere mögliche Richtungen senden kann, die in einem Lichtkegel enthalten sind, dessen Spitze sich in der zentralen Zone befindet, so dass sich jeder Lichtstrahl in seinem Lichtkegel ausbreitet, und ein Reflektorsystem, das so konfiguriert ist, dass es jeden Lichtstrahl, der sich in seinem Lichtkegel ausbreitet, empfangen kann und jeden empfangenen Lichtstrahl in einem Raum reflektieren kann, wobei das Reflektorsystem so konfiguriert ist, dass es sich zwischen mehreren Positionen bewegen kann, so dass eine Positionsänderung den Weg eines durch das Reflektorsystem reflektierten Lichtstrahls modifiziert, **dadurch gekennzeichnet, dass** die optische Vorrichtung eine Vorrichtung gemäß einem der Ansprüche 1 bis 14 ist.

25. Beleuchtungsvorrichtung (1) zum Erzeugen von Lichteffekten, umfassend wenigstens eine Quelle, die so konfiguriert ist, dass sie einen Lichtstrahl emittieren kann, eine optische Vorrichtung, die mit einem Motor assoziiert ist und so konfiguriert ist, dass sie jeden Lichtstrahl ausgehend von einer zentralen Zone in mehrere mögliche Richtungen senden kann, die in einem Lichtkegel enthalten sind, dessen Spitze sich in der zentralen Zone befindet, so dass sich jeder Lichtstrahl in seinem Lichtkegel ausbreitet, und ein Reflektorsystem, das so konfiguriert ist, dass es jeden Lichtstrahl, der sich in seinem Lichtkegel ausbreitet, empfangen kann und jeden empfangenen Lichtstrahl in einem Raum reflektieren kann, wobei das Reflektorsystem so konfiguriert ist, dass es sich zwischen mehreren Positionen bewegen kann, so dass eine Positionsänderung den Weg eines durch das Reflektorsystem reflektierten Lichtstrahls modifiziert, **dadurch gekennzeichnet, dass** die optische Vorrichtung ein optisches Modul gemäß einem der Ansprüche 15 bis 21 ist.

## Claims

1. Optical device (D) comprising a support (2) mounted on a rotational drive motor (5) and a reflective optical component (4), the support (2) comprising at least one sleeve (23) coaxial with the axis of rotational drive, one end of the sleeve (23) defining an inlet orifice and comprising in its wall an opening (25) defining an outlet orifice in which the reflective optical component (4) is housed, so that a light beam (F) entering via the inlet orifice is reflected by the reflective optical component (4) so as to exit via the outlet orifice, **characterized in that** the reflective optical component (4) is mounted and held in the sleeve (23) by cooperation of shape with the wall (22) of said sleeve (23).

2. Optical device according to claim 1, **characterized in that** the support (2) comprises a disk (21) from a face of which the sleeve (23) projects upwards, in a single piece with the disk (21), the sleeve (23) being constituted by a circular wall (22) projecting on the face of the disk (21), defining the sleeve (23) having a circular cross section.

3. Optical device according to claim 1, **characterized in that** the support (2) comprises a disk from a face of which the sleeve projects upwards, the sleeve being fastened on the disk (21) by fastening means complementary to fastening means provided on the disk (21).

4. Optical device (D) according to one of claims 1 to 3, **characterized in that** the reflective optical component (4) is chosen from the reflective optical components such as a reflective surface such as planar mirror, concave mirror, convex mirror, reflective diffraction gratings, which are networks of elements such as stripes, reflective lines, making it possible to separate a beam into multiple beams, a reflective diffuser, optical components that are partially reflective such as polarizing plates.

5. Optical device according to one of claims 1 to 4, **characterized in that** the sleeve (23) comprises at least one opening (24), arranged in its wall, in which the reflective optical component (4) is housed and held engaged in the sleeve (23).

6. Optical device (D) according to claim 5, **characterized in that** the sleeve (23) comprises two diametrically opposite and identical openings (24) in which the reflective optical component (4) is housed so as to extend in the sleeve between these two openings (24).

7. Device (D) according to claim 6, **characterized in that** the openings are two slots (24) arranged to be identical and diametrically opposite one another in the sleeve (23).

8. Optical device (D) according to one of claims 5 to 7, **characterized in that** the reflective optical component (4) is mounted and held in the sleeve by force-fitting in the opening or openings (24).

9. Optical device according to one of claims 5 to 7, **characterized in that** the device (D) comprises a holding member (3) of the optical component (4) in the support (2), extending along the sleeve (23) to cover the opening or openings (24) in which opening or openings the optical component (4) is housed, the holding member (3) and the support (2) respectively comprising complementary fastening means.

10. Device according to claim 9, **characterized in that** the holding member (3) is constituted by a holding sleeve (31) capable of being engaged on the sleeve (23) of the support to extend against said sleeve (23) and cover the opening or the two openings (24) of the sleeve (23) and comprising an orifice (32) arranged in its circular wall to be placed to correspond with the outlet opening (25) of the support (2).

11. Optical device (D) according to one of claims 9 or 10, **characterized in that** the complementary fastening means of the holding member (3) and of the support (2) are constituted by screwing means (33, 28), clipping means such as clip fasteners, a fastening system of the bayonet type.

12. Optical device (D) according to one of claims 1 to 4, **characterized in that** the reflective optical component (4) is mounted and held in the sleeve, overmoulded in the wall of the sleeve.

13. Optical device (D) according to one of claims 1 to 12, **characterized in that** the optical device (D) comprises at its inlet orifice of the light beam, a closure element (35) allowing the light beam to pass at least partially towards the reflective optical component (4).

14. Optical device (D) according to one of claims 1 to 13, **characterized in that** the optical device (D) comprises at its outlet orifice of the light beam, a closure element allowing the reflected light beam to pass at least partially.

15. Optical device (D) according to one of claims 1 to 14, **characterized in that** a face of the disk (21) comprises a single reflective zone (214) constituted by a short segment on a first circular track.

16. Optical device (D) according to claim 15, **characterized in that** the face of the disk (21) comprises a second circular track of reflective zones (213) alternating with non-reflective zones, concentric with the first.

17. Module (MO) comprising an optical device (D) of the type comprising a support (2) with a reflective optical component (4) and a motor (5) for driving said support in rotation, according to one of claims 1 to 16, **characterized in that** it comprises a protective hood (12) equipped with a bottom (121) surrounded by a peripheral rim (121), the optical device (D) being fastened by its motor (5) on the bottom (121) of the hood (12), with the inlet and outlet orifices of a light beam of the device projecting from said protective hood (12).

18. Module according to claim 17, **characterized in that** the protective hood (12) comprises control means of the motor, comprising an electronic card (10) having a central orifice (11) engaged around the motor (5) of the optical device and fastened in the protective hood (12) so that one face is facing the bottom of the protective hood, distanced therefrom, the two faces of the card (10) being capable of bearing components for control of the motor and the operation and/or supply cables.

19. Module (MO) according to claim 18, **characterized in that** the control means comprise means for real-time measurement of the speed of rotation and of the angular position of the optical device (D), these means comprising a first infra-red emitter/receiver (15, 16) emitting an infra-red radiation in the direction of a support surface (2) which comprises a single facing reflective zone (214) in the form of a segment belonging to a circular track (214).

20. Module (MO) according to claim 19, **characterized in that** the control means comprise a second infra-red emitter/receiver (13, 14) so as to emit an infra-red radiation in the direction of a support surface (2) having alternate zones (213) reflecting the infra-red radiation and zones not reflecting the infra-red radiation in order to form a circular track (212) concentric with the first (214).

21. Module (MO) according to one of claims 17 to 20, **characterized in that** the protective hood (12) comprises means of fastening said optical module (MO) in a lighting device (1), fastened at one end in the protective hood (12) and at their opposite end on an element of the lighting device and keeping a gap between said protective hood (12) and said element, in which gap the optical device (D) projects, these fastening means being such that legs (20) made from a transparent material, a lateral wall made from a transparent material, form a transparent ring.

22. Module (MO) according to one of claims 17 to 20, **characterized in that** it also comprises a fastening base part (6), linked to the part of the optical module comprising the optical device (D), by connecting means (20) extending between the protective hood (12) and the fastening base part (6) and keeping a gap between said protective hood (12) and the fastening base part (6), in which gap the optical device (D) projects, these connecting means being such that the legs (20) made from a transparent material, a lateral wall made from a transparent material, form a transparent ring.

23. Module (MO) according to claim 22, **characterized in that** the fastening base part (6) of the optical module (MO) comprises a central well (61) allowing the passage of a light beam towards the optical device (D) located positioned above the fastening base part (6).

24. Lighting device (1) for producing lighting effects, comprising at least one source arranged to emit a light beam, an optical device associated with a motor, arranged to send each light beam from a central zone in several possible directions contained within a cone of light the apex of which is situated in the central zone, so that each light beam propagates in its cone of light, and a reflective system arranged to receive each light beam propagating in its cone of light and to reflect in a space each light beam received, said reflective system being arranged to move between several positions so that a change of position modifies the path of a light beam reflected by the reflective system, **characterized in that** the optical device is a device according to one of claims 1 to 14.

25. Lighting device (1) for producing lighting effects, comprising at least one source arranged to emit a light beam, an optical device associated with a motor, arranged to send each light beam from a central zone in several possible directions contained within a cone of light the apex of which is situated in the central zone, so that each light beam propagates in its cone of light, and a reflective system arranged to receive each light beam propagating in its cone of light and to reflect in a space each light beam received, said reflective system being arranged to move between several positions so that a change of position modifies the path of a light beam reflected by the reflective system, **characterized in that** the optical device is an optical module according to one of claims 15 to 21.
